(19) Europäisches Patentamt / European Patent Office / Office européen des brevets

(11) **EP 1 453 177 B1**

(12) **EUROPÄISCHE PATENTSCHRIFT**

(45) Veröffentlichungstag und Bekanntmachung des Hinweises auf die Patenterteilung:
**12.09.2018 Patentblatt 2018/37**

(51) Int Cl.:
*H02J 9/06* (2006.01)     *H02M 3/10* (2006.01)
*H02M 3/155* (2006.01)     *H02M 3/28* (2006.01)

(21) Anmeldenummer: **04003336.7**

(22) Anmeldetag: **14.02.2004**

(54) **GLEICHSTROMWANDLERSCHALTUNG**

DC/DC CONVERTER CIRCUIT

CIRCUIT DE CONVERSION DC/DC

(84) Benannte Vertragsstaaten:
**AT BE BG CH CY CZ DE DK EE ES FI FR GB GR HU IE IT LI LU MC NL PT RO SE SI SK TR**

(30) Priorität: **27.02.2003 DE 10308411**

(43) Veröffentlichungstag der Anmeldung:
**01.09.2004 Patentblatt 2004/36**

(73) Patentinhaber: **Bosch Rexroth Aktiengesellschaft
97816 Lohr am Main (DE)**

(72) Erfinder: **Wecht, Gerhard
64668 Rimbach (DE)**

(74) Vertreter: **Thürer, Andreas
Bosch Rexroth AG
BR/IPR
Zum Eisengiesser 1
97816 Lohr am Main (DE)**

(56) Entgegenhaltungen:
**EP-A- 0 562 772**     **EP-A- 0 945 968**
**DE-A1- 10 138 536**     **US-A- 5 015 870**

**Beschreibung**

Die Erfindung betrifft eine Gleichstromwandlerschaltung und ein Verfahren zum Betreiben einer Gleichstromwandlerschaltung.

Gleichstromwandlerschaltungen weisen üblicherweise eine Wandlereinheit auf, an dessen Eingang eine Eingangsspannung angelegt wird und an dessen Ausgang eine Ausgangsspannung abgreifbar ist. Die Ausgangsspannung bleibt für einen vorbestimmten Eingangsspannungsbereich konstant, wenn eine vorgegebene Nennlast am Ausgang nicht überschritten wird. Die Eingangsspannung wird üblicherweise über einen Kondensator gepuffert, an dem die Eingangsspannung über eine Entkoppel-Diode angelegt ist. Dies ist beispielsweise auch aus der Druckschrift US 5 258 901 zu entnehmen.

DE 101 38 536 zeigt eine Wandlereinheit und eine Kapazität, wie im Oberbegriff von Anspruch 1 beschrieben.

EP 0 945 968 zeigt einen Aufwärtswandler, bei welchem ein Kondensator am Eingang eines Gleichspannungswandlers auf die gleiche Spannung geladen wird wie ein Ausgangskondensator oder auf eine Spannungsdifferenz zwischen Spannungen an zwei Kondensatoren.

US 5 015 870 zeigt eine Spannungsversorgungsschaltung jedoch keine Gleichstromwandlerschaltung.

Der Kondensator am Eingang der Wandlerschaltung garantiert ein Halten der Ausgangsspannung unter Nennlast für eine vorbestimmte Mindestzeit, z.B. 10 msek. Dies bedeutet, dass die Spannung, die bei Ausfall der Eingangsspannung in den Kondensatoren vorhanden ist und die im wesentlichen der Höhe der Versorgungsspannung zum Zeitpunkt des Ausfallens abzüglich der Durchlassspannung der Entkoppel-Diode entspricht, eine kurzzeitige Weiterversorgung der Wandlerschaltung darstellt.

Daraus bezieht der Gleichstromwandler die Leistung, die während der geforderte Haltezeit am Ausgang der Gleichstromwandlerschaltung abgegeben werden soll.

Insbesondere wenn die geforderten Haltezeiten bereits dann garantiert werden müssen, wenn die Eingangsspannung einen durch die Wandlerschaltung vorgegebenen Minimalwert unterschreitet, werden große Kapazitäten zum Gewährleisten der Haltezeit benötigt.

Die Haltezeit einer Gleichstromwandlerschaltung kann erhöht werden, indem die Eingangskapazität zum Speichern der Eingangsspannung vergrößert wird. Insbesondere bei wachsenden Haltezeiten ist der Platzbedarf für solche Kapazitäten enorm, insbesondere weil hohe Kapazitäten aus mehreren Einzelkapazitäten aufgebaut werden müssen. Dies stellt neben erhöhtem Platzbedarf auch ein erhebliches Fehlerrisiko aufgrund von möglichen Kontaktierungsfehlern dar. Darüber hinaus wäre es wünschenswert, die Kapazität zur Pufferung der Eingangsspannung reduzieren zu können, um somit kleinere Gleichstromwandlerschaltungen zur Verfügung stellen zu können.

Es ist daher Aufgabe der vorliegenden Erfindung, eine Gleichstromwandlerschaltung zur Verfügung zu stellen, die eine hohe Haltezeit und geringen Platzbedarf für Eingangskondensatoren aufweist.

Diese Aufgabe wird durch die Gleichstromwandlerschaltung nach Anspruch 1 sowie durch das Verfahren zum Betreiben einer Gleichstromwandlerschaltung nach Anspruch 11 gelöst.

Weitere vorteilhafte Ausgestaltungen der Erfindung sind in den abhängigen Ansprüchen angegeben.

Gemäß einem ersten Aspekt der vorliegenden Erfindung ist eine Gleichstromwandlerschaltung mit einer Wandlereinheit vorgesehen. Die Wandlereinheit dient dazu, eine Eingangsspannung in eine Ausgangsspannung mit einem vorgegebenen Ausgangspotential umzuwandeln. Das vorgegebene Ausgangspotential wird dabei konstant gehalten, so lange sich die Eingangsspannung in einem vorbestimmten Spannungsbereich befindet. Es ist eine Kapazität vorgesehen, um bei Ausfall der Eingangsspannung an einem Eingang der Wandlereinheit eine Spannung zur Verfügung zu stellen, so dass die Ausgangsspannung des Ausgangspotentials über einen vorbestimmten Zeitraum gehalten wird.

Dieser vorbestimmte Zeitraum wird üblicherweise Haltezeit genannt.

Erfindungsgemäß ist weiter vorgesehen, dass die Gleichstromwandlerschaltung eine Ladeschaltung aufweist, um die Kapazität mit einem Speicherpotential aufzuladen, das größer ist als das Potential der Eingangsspannung. Ferner ist eine Entladeschaltung vorgesehen, um der Wandlereinheit bei Ausfall der Eingangsspannung Ladung aus der Kapazität so zur Verfügung zu stellen, dass das Ausgangspotential der Ausgangsspannung über den vorbestimmten Zeitraum erhalten wird.

Die Idee der Erfindung besteht darin, Ladung in der Kapazität mit einer höheren Spannung als die vorgegebene Eingangsspannung zu speichern, um somit die gespeicherte Ladung zu. erhöhen, ohne gleichzeitig die Kapazität des Kondensators erhöhen zu müssen. Auf diese Weise kann ein Ladungsspeicher geschaffen werden, der nach Ausfall der Eingangsspannung Ladung der Wandlereinheit zur Verfügung stellt, so dass die Wandlereinheit die Ausgangsspannung für die vorgegebene Haltezeit aufrecht erhält.

Die Erfindung hat den Vorteil, dass die Kapazität für die Eingangsspannung reduziert werden kann und somit der Platzbedarf und die Verwendung von Einzelbauteilen erheblich vermindert werden kann.

Die Kapazität kann deshalb so deutlich reduziert werden, weil der Spannungshub, der zur Pufferung der Eingangsspannung zur Verfügung steht, quadratisch in die Energiebilanz eingeht.

$$C = P \times \frac{t}{(U_{Ladespannung} - U_{Mindesteingangsspannung})^2}$$

Man erkennt, dass in der Spannungsdifferenz zwischen der Ladespannung der Kapazität und einer Mindesteingangsspannung der Wandlereinheit, die durch die Wandlereinheit vorgegeben ist, eine erhebliche Ladung speicherbar ist. So kann die Kapazität um den Faktor des Quadrats der Spannungsdifferenz bei gleicher Haltezeit und Nennlast deutlich vermindert werden.

Vorzugsweise kann vorgesehen sein, dass die Ladeschaltung einen Transformator, einen Gleichrichter und/oder einen von der Eingangsspannung gespeisten Wechselstromgenerator umfasst, um die Kapazität mit dem erhöhten Speicherpotential aufzuladen. Dies kann auch durch eine Ladungspumpe erreicht werden, die durch die Eingangsspannung gespeist ist und ein Potential, das größer ist als die Eingangsspannung, erzeugt, um die Kapazität aufzuladen.

Vorzugsweise ist eine zweite Kapazität vorgesehen, die an dem Eingang der Wandlerschaltung angeschlossen ist, um mit der Eingangsspannung aufgeladen zu werden. Die Ladeschaltung ist so gestaltet, um die Ladung der ersten Kapazität nach Ausfall der Eingangsspannung an die zweite Kapazität abzugeben. Auf diese Weise kann die Entladeschaltung erheblich vereinfacht werden, da diese nicht kontinuierlich einen Strom für die Wandlereinheit zur Verfügung stellen muss, sondern lediglich während der Haltezeit das Speicherpotential der zweiten Kapazität auf einem Spannungsniveau halten muss, bei dem die Wandlereinheit die Ausgangsspannung bei vorgegebener Nennlast noch erzeugen kann.

Vorzugsweise ist vorgesehen, dass die erste Kapazität über die Entladeschaltung so mit der zweiten Kapazität gekoppelt ist, dass die erste Kapazität Ladung an die zweite Kapazität abgibt, wenn die in der zweiten Kapazität gespeicherte Potentialdifferenz einen unteren Schwellwert unterschreitet. Der untere Schwellwert ist durch eine Potentialdifferenz bestimmt, bei der die Wandlereinheit am Ausgang gerade noch die geforderte Spannung liefern kann.

Auf diese Weise wird die Wandlereinheit im Bereich der durch die Wandlereinheit vorgegebenen Mindesteingansspannung betrieben.

Vorzugsweise ist vorgesehen, dass die Entladeschaltung eine Schalteinrichtung aufweist, über die die erste Kapazität mit der zweiten Kapazität gekoppelt ist. Die Entladeschaltung kann weiterhin eine Detektionsschaltung aufweisen, um festzustellen, ob die in der zweiten Kapazität gespeicherte Potentialdifferenz den Schwellwert unterschreitet. Die Schalteinrichtung ist in diesem Fall so gesteuert, dass die erste Kapazität mit der zweiten Kapazität verbunden wird, um Ladung von der ersten Kapazität an die zweite Kapazität abzugeben, wenn die in der zweiten Kapazität gespeicherte Potentialdifferenz den unteren Schwellwert unterschreitet. Auf diese Weise kann gewährleistet werden, dass die Ladung der zweiten Kapazität während der Haltezeit den unteren Schwellwert im wesentlichen nicht unterschreitet.

Damit bei Durchschalten der Schalteinrichtung nicht die gesamte Ladung der ersten Kapazität in die zweite Kapazität fließt und dort eventuell eine Eingangsspannung an der Wandlereinheit hervorruft, die über der maximal zulässigen Eingangsspannung der Wandlereinheit liegt, bzw. eine Spannung hervorruft, die über der Durchschlagsspannung der zweiten Kapazität liegt, ist vorgesehen, dass die zweite Kapazität mit der ersten Kapazität so lange verbunden ist, bis die gespeicherte Spannungsdifferenz in der zweiten Kapazität einen oberen Schwellwert überschreitet, der einen vorbestimmten Betrag über dem unteren Schwellwert liegt. Auf diese Weise schwankt die gespeicherte Potentialdifferenz in der zweiten Kapazität um einen vorgegebenen zwischen dem oberen und dem unteren Schwelllastwert, so dass gewährleistet ist, dass weder eine zu geringe noch eine zu hohe Eingangsspannung an der Wandlereinheit anliegt.

Diesbezüglich kann vorgesehen sein, dass die Detektionsschaltung eine Komparatorschaltung mit einer Hysterese aufweist, wobei die Hysterese den unteren Schwellwert und den oberen Schwellwert realisiert.

Gemäß einem weiteren Aspekt der vorliegenden Erfindung ist ein Verfahren zum Betreiben einer Gleichstromwandlerschaltung mit einer Wandlereinheit vorgesehen. Dabei wird eine Kapazität bei Anliegen der Eingangsspannung auf eine Speicherpotentialdifferenz aufgeladen, die größer ist als die Potentialdifferenz der Eingangsspannung. Bei Ausfall der Eingangsspannung wird Ladung aus der Kapazität so der Wandlereinheit zur Verfügung gestellt, dass die Ausgangsspannung über den vorbestimmten Zeitraum gehalten wird.

Bevorzugte Ausführungsformen der Erfindung werden im folgenden anhand der beigefügten Zeichnungen näher erläutert.

Es zeigen:

Fig. 1     ein Blockschaltbild einer bevorzugten Ausführungsform der erfindungsgemäßen Schaltung;

Fig. 2     eine weitere Ausführungsform der erfindungsgemäßen Schaltung und

Fig. 3     ein Zeitdiagramm, das den Verlauf der Spannung in den Hilfskondensatoren und den Arbeitskondensatoren darstellt.

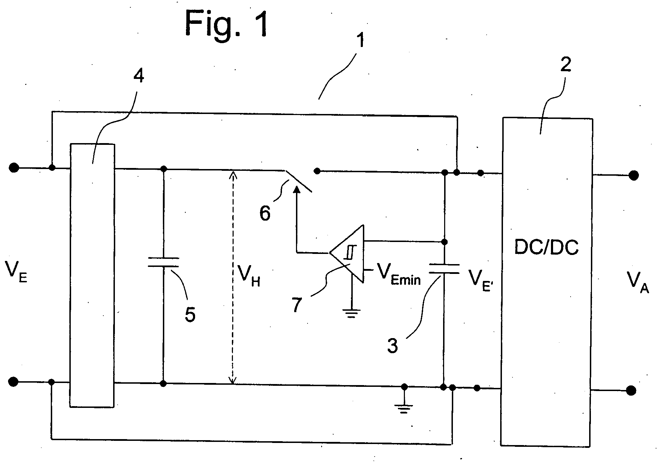

In Fig. 1 ist eine bevorzugte Ausführungsform einer erfindungsgemäßen Gleichstromwandlerschaltung dargestellt. Die Gleichstromwandlerschaltung 1 weist eine Wandlereinheit 2 auf, die eine Eingangsgleichspannung VE' in eine Ausgangsgleichspannung umwandelt. Die Wandlereinheit 2 funktioniert dabei derart, dass bei einer Eingangsspannung VE' in einem Eingangsspannungsbereich zwischen einer Mindesteingangsspannung VE'min und einer durch die Dimensionierung und die Belastungsfähigkeit der in der Wandlereinheit 2 verwendeten Bauelemente bestimmten Maximalspannung die Wandlereinheit 2 eine konstante Ausgangsspannung VA bei einer Beanspruchung unter Nennlast ausgibt.

Die Wandlereinheit 2 kann als transformatorischer Wandler oder Drosselwandler ausgeführt sein, d.h. die Wandlereinheit 2 kann z.B. zur Wandlung der Spannungen eine Drossel bzw. einen Transformator aufweisen, an deren Eingang eine aus der Gleichspannung generierte Wechselspannung bzw. eine gepulste Spannung angelegt ist. An einer Sekundärseite des Transformators kann dann eine transformierte Wechselspannung abgegriffen werden, die nach dem Gleichrichten und dem Glätten durch Glättungskondensatoren die gewünschte Ausgangsspannung VA ergibt. Die Ausgangsspannung wird konstant gehalten, indem die Generierung der Wechselspannung an die zur Verfügung gestellte Versorgungsspannung VE angepasst wird, z. B. durch eine Pulsweitenmodulation. Zur Bereitstellung der Wechselspannung auf der Primärseite des Transformators können Sperrwandler, Durchflusswandler, Gegentaktwandler u.ä. verwendet werden. Diese Schaltungen sind üblich bei der Verwendung von Schaltnetzteilen und werden im folgenden als bekannt vorausgesetzt.

Die Wandlereinheit 2 kann auch als Linearregler ausgebildet sein, d.h. ohne galvanische Trennung zwischen Eingangs- und Ausgangsteil der Wandlereinheit 2.

Gleichstromwandlerschaltungen 1 haben häufig die Spezifikation, nach Ausfall der Versorgungsspannung VE noch eine vorbestimmte Zeit, die sogenannte Haltezeit, die Ausgangsspannung VA bei einer Beanspruchung unter der vorgegebenen Nennlast zu halten. Dies wird bei heutigen Gleichstromspannungswandlerschaltungen dadurch erreicht, dass die Eingangsgleichspannung VE' mit einer Kapazität gepuffert ist, die nach Ausfall der Versorgungsspannung VE Ladung der Wandlereinheit 2 zuführt und dadurch das Halten der Ausgangsspannung VA über die Haltezeit ermöglicht.

Je länger die Haltezeiten sind, desto größer muss die am Eingang der Wandlereinheit 2 befindliche Kapazität sein. Solche Kapazitäten benötigen viel Platz, insbesondere dann, wenn sie aus mehreren Einzelkapazitäten aufgebaut werden muss.

Eine solche Kapazitätspufferung der Versorgungsspannung VE ist in Fig. 1 dargestellt. Es ist ein Arbeitskondensator 3 vorgesehen, der mit den beiden Eingangsanschlüssen der Wandlereinheit 2, an denen ebenfalls die Versorgungsspannung VE anliegt, verbunden ist. Ein erster Eingangsanschluss ist mit einem ersten Anschluss des Arbeitskondensators 3, und ein zweiter Eingangsanschluss der Wandlereinheit 2 ist mit einem zweiten Anschluss des Arbeitskondensators 3 und mit einem festgelegten Massepotential GND verbunden.

An die Versorgungsspannung VE ist eine Ladeschaltung 4 angeschlossen, über die ein Hilfskondensator 5 aufgeladen werden kann, wenn die Versorgungsspannung VE angelegt ist. Die Ladeschaltung 4 ist so gestaltet, dass aus der Versorgungsspannung VE eine Ladespannung für den Hilfskondensator 5 generiert wird, die größer ist als die Versorgungsspannung VE.

Das Generieren der Ladespannung kann auf verschiedene Weise erfolgen. Zum einen ist es möglich, eine Ladungspumpenschaltung vorzusehen, die, versorgt durch die Versorgungsspannung VE, den Hilfskondensator 5 auf die Ladespannung auflädt, die größer ist als die Versorgungsspannung VE. Zum anderen kann in einem bereits in der Wandlereinheit 2 vorgesehenen Transformator eine Hilfswicklung vorgesehen sein, deren Windungszahl so dimensioniert ist, dass eine Wechselspannung entsteht, deren Scheitelspannungspotentiale über der Versorgungsspannung VE liegen. Mit Hilfe eines Gleichrichters kann die so erzeugte Wechselspannung gleichgerichtet werden und als Ladespannung dem Hilfskondensator 5 zur Verfügung gestellt werden.

Es ist weiterhin auch möglich, eine Hilfswicklung in einer Speicherdrossel vorzusehen, die in der Wandlereinheit 2 verwendet wird. Diese Hilfswicklung kann so dimensioniert sein, dass eine Wechselspannung abgegriffen wird, wobei die Spannungsdifferenz zwischen den Scheitelspannungen größer ist als die Versorgungsspannung VE.

Auch in diesem Fall kann die abgegriffene Wechselspannung mit Hilfe eines Gleichrichters gleichgerichtet und dann dem Hilfskondensator 5 zum Aufladen zur Verfügung gestellt werden.

Mit Hilfe der Ladeschaltung 4 kann nach dem Einschalten der Versorgungsspannung VE der Hilfskondensator 5 strombegrenzt aufgeladen werden. Solange die Versorgungsspannung VE anliegt, ist der Hilfskondensator 5 vom Eingang der Wandlereinheit 2 bzw. von dem Arbeitskondensator 3 getrennt, um die hohe Ladespannung nicht unmittelbar an den Eingang der Wandlereinheit anzulegen. Die Trennung zwischen Hilfskondensator 5 und Arbeitskondensator 3 ist durch einen Schalter 6 gegeben. Der Schalter ist gesteuert durch den Ausgang einer Komparatorschaltung 7, in der eine Hysterese realisiert ist.

Der Schalter 6 und die Komparatorschaltung 7 bilden eine Entladeschaltung für den Hilfskondensator 5. Die Komparatorschaltung 7 ist mit einem ersten Eingang mit einem ersten Anschluss des Arbeitskondensators 3 verbunden. An einem zweiten Eingang der Komparatorschaltung 7 liegt eine vorgegebene untere Schwellspannung an, die im wesentlichen einen geringen Betrag unterhalb der zulässigen minimalen Eingangsspannung VE'min der Wandlereinheit

2 liegt. Vorzugsweise liegt diese untere Schwellspannung um etwa 0 Volt bis 2 Volt unterhalb der zulässigen minimalen Eingangsspannung VE'min.

Sinkt der Wert der Versorgungsspannung VE, z.B. bei einem vollständigen Ausfall, unter die Schwellspannung $VE'_{min}$, so aktiviert die Komparatorschaltung 7 den Schalter 6, so dass ein erster Anschluss des Hilfskondensators 5 mit dem ersten Anschluss des Arbeitskondensators 3 und mit einer Eingangleitung der Wandlereinheit 2 verbunden wird. Da die zweiten Anschlüsse des Hilfskondensators 5 und des Arbeitskondensators 3 auf dem Massepotential GND liegen, fließt nun die in dem Hilfskondensator 5 gespeicherte Ladung in den Arbeitskondensator 3 und in die Wandlereinheit 2.

Der Arbeitskondensator 3 wird dadurch aufgeladen, so dass die darin gespeicherte Ladung erhöht wird und die Spannung zwischen dem ersten Anschluss und dem zweiten Anschluss des Arbeitskondensators 3 ansteigt.

Die Komparatorschaltung 7 weist eine Hysterese auf, so dass nicht sofort nach dem Überschreiten des Schwellwertes $VE'_{min}$ der Schalter wieder geöffnet wird, sondern dass zunächst ein oberer Schwellwert überschritten werden muss, um den Schalter 6 zu öffnen. Der obere Schwellwert ist bestimmt durch die minimale Eingangsspannung $VE'_{min}$ zuzüglich eines geringen Spannungsbetrages, z.B. 1 Volt bis 2 Volt. Damit ist gewährleistet, dass der Arbeitskondensator 3 nicht auf eine Spannung aufgeladen wird, die für die nachgeschalteten Bauelemente in der Wandlereinheit 2 zu hoch ist, wobei diese zerstört werden können. Weiterhin sorgt die Hysterese dafür, dass die Entladeschaltung keine Schwingung erzeugt, die die Wandlereinheit 2 negativ beeinflusst.

Ist der obere Schwellwert durch Fließen von Ladungen von dem Hilfskondensator 5 auf dem Arbeitskondensator 3 erreicht, wird der Schalter wieder geöffnet und die Wandlereinheit 2 wird nun wieder ausschließlich über den Arbeitskondensator 3 mit Spannung versorgt. Da am Ausgang der Wandlereinheit 2 weiterhin eine Spannung zur Verfügung gestellt werden muss, und ein Strom zur Bereitstellung der Nennlast zur Verfügung gestellt wird, fließt die Ladung aus dem Arbeitskondensator 3 über die Wandlereinheit 2 ab. Dadurch sinkt dessen Ladung und die anliegende Spannung. Wird nun wieder der untere Schwellwert $VE_{min}$ unterschritten, wird der Schalter 6 wie zuvor beschrieben, erneut geschlossen, so dass erneut Ladung aus dem Hilfskondensator 5 in den Arbeitskondensator 3 fließt.

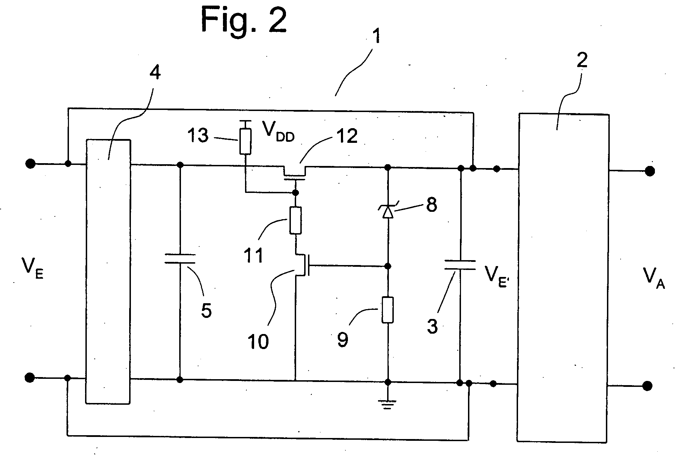

Dies wird so lange durchgeführt, bis die Spannung in dem Hilfskondensator die minimale Eingangsspannung $VE'_{min}$ erreicht hat, die zum Betreiben der Wandlereinheit 2 notwendig ist. In Fig. 2 ist eine weitere Ausführungsform einer Entladeschaltung für die erfindungsgemäße Gleichstromwandlerschaltung dargestellt. Gleiche Bezugszeichen entsprechen gleichen Elementen.

Die Gleichstromwandlerschaltung der Fig. 2 weist ebenfalls wie die Ausführungsform nach Fig. 1 eine Wandlereinheit 2, einen Arbeitskondensator 3, eine Ladeschaltung 4 und einen Hilfskondensator 5 auf. Die Entladeschaltung weist weiterhin eine Zenerdiode 8 und einen ersten Widerstand 9 auf, wobei ein erster Anschluss der Zenerdiode 8 mit dem ersten Anschluss des Arbeitskondensators 3 und ein zweiter Anschluss der Zenerdiode 8 mit einem ersten Anschluss des Widerstandes 9, und ein zweiter Anschluss des Widerstandes 9 mit dem zweiten Anschluss des Arbeitskondensators 3, dem zweiten Anschluss des Hilfskondensators 5, und dem Massepotential verbunden ist.

Liegt am Eingang der Wandlereinheit 2 eine gewünschte Eingangsspannung VE' an, d.h. die Eingangsspannung VE befindet sich in dem von der Wandlereinheit 2 bestimmten Arbeitsbereich, so fließt durch die Zenerdiode 8 ein Durchbruchsstrom, der in dem ersten Widerstand 9 einen Spannungsabfall mit einer nahezu konstanten Zenerspannung bewirkt.

Auf diese Weise liegt an dem ersten Anschluss des ersten Widerstandes 9 bzw. an dem zweiten Anschluss der Zenerdiode 8 eine Spannung an, die über dem Massepotential liegt.

Diese Spannung wird als Steuerspannung für einen ersten N-Kanal-Transistor 10 verwendet. Der erste N-Kanal-Transistor 10 ist mit einem ersten Anschluss mit dem Massepotential und mit einem zweiten Anschluss mit einem ersten Anschluss eines zweiten Widerstandes 11 verbunden. Ein zweiter Anschluss des zweiten Widerstandes 11 ist mit einem Steueranschluss eines zweiten N-Kanal-Transistors 12 verbunden.

Um bei einem gesperrten ersten N-Kanal-Transistor 10 das Potential an Steuereingang nicht frei schwebend zu lassen, ist ein Pull-up-Widerstand 13 vorgesehen, der mit seinem ersten Anschluss mit dem Steueranschluss des zweiten N-Kanal-Transistors und mit seinem zweiten Anschluss mit einem hohen Versorgungsspannungspotential Vpp verbunden ist.

Der zweite N-Kanal-Transistor 12 dient als Schalter, so dass ein erster Anschluss des zweiten N-Kanal-Transistors 12 mit dem ersten Anschluss des Hilfskondensators 5 und ein zweiter Anschluss des N-Kanal-Transistors 12 mit dem ersten Anschluss des Arbeitskondensators 3 verbunden ist.

Ist die Eingangsspannung VE' an der Wandlereinheit 2 oberhalb des unteren Schwellwertes, so befindet sich die Zenerdiode 8 im Durchbruch, und eine Spannung, gebildet durch den Durchbruchsstrom im ersten Widerstand 9 liegt an dem Steueranschluss des ersten N-Kanal-Transistors 10 an. Damit ist der erste N-Kanal-Transistor 10 durchgesteuert, so dass das Potential an dem Steueranschluss des zweiten N-Kanal-Transistors 12 über den zweiten Widerstand 11 auf das Massepotential gezogen wird. Der zweite N-Kanal-Transistor ist dann gesperrt.

Fällt z.B. nach einem Ausfall der Versorgungsspannung VE das Potential zwischen den Anschlüssen des Arbeitskondensators 3 ab und erreicht diese Spannung den unteren Schwellwert, so sperrt die Zenerdiode 8 abrupt, so dass über den ersten Widerstand 9 keine Spannung abfällt.

Es liegt dann an dem Steueranschluss des ersten N-Kanal-Transistors 10 das Massepotential an, wodurch dieser sperrt und das Potential an dem Steueranschluss des zweiten N-Kanal-Transistors 12 auf das hohe Versorgungsspannungspotential VDD hebt, so dass dieser auf Durchlass geschaltet wird und den ersten Anschluss des Hilfskondensators 5 mit dem ersten Anschluss des Arbeitskondensators 3 verbindet, so dass Ladung von dem Hilfskondensator 5 auf den Arbeitskondensator 3 fließen kann.

Nun steigt die Spannung an dem Arbeitskondensator 3 an, bis die Zenerdiode durchbricht und ein Durchbruchsstrom fließt, der den Spannungsabfall über dem ersten Widerstand 9 bewirkt. Der erste N-Kanal-Transistor 10 leitet daraufhin und sperrt den zweiten N-Kanal-Transistor 12, so dass der Hilfskondensator 5 vom Eingangsbereich der Wandlereinheit 2 getrennt wird.

Die Dimensionierung der Zenerdiode 8 und des ersten N-Kanal-Transistors 10 muss so erfolgen, dass durch sie eine untere und eine obere Schwellspannung definiert wird. Mit der Auswahl der Zenerdiode und der Gate-Source-Spannung des N-Kanal-Transistors lässt sich eine Hysterese realisieren, die sich über wenige Volt erstreckt. Damit ist gewährleistet, dass die Trennung zwischen Hilfskondensator 5 und dem Arbeitskondensator 3 vorgenommen wird, bevor die Spannung in dem Arbeitskondensator 3 einen Wert übersteigt, der schädlich ist für die Bauelemente der Wandlereinheit 2. Der untere Schwellwert bestimmt sich im wesentlichen durch den unteren Spannungsgrenzwert, bei dem die Wandlereinheit 2 gerade noch eine konstante Ausgangsspannung VA abgeben kann.

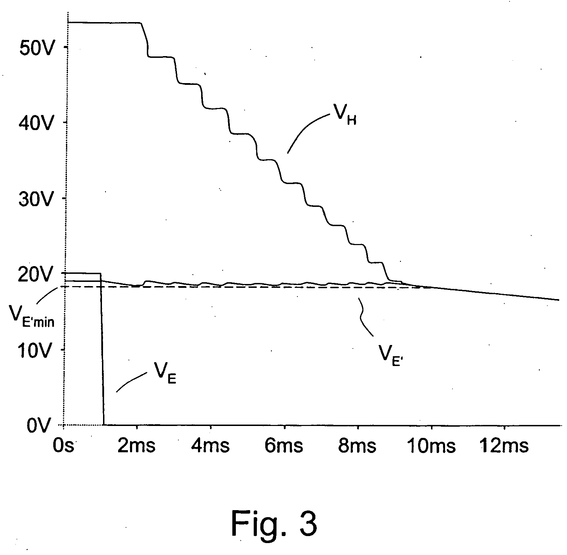

In Fig. 3 ist der zeitliche Verlauf der Versorgungsspannung VE, der Eingangsspannung VE' und der Ladespannung VH über dem Hilfskondensator 5 dargestellt. Im Anfangszustand wird der Gleichspannungswandler mit einer Versorgungsspannung von 20 Volt betrieben, so dass im Anfangszustand bei anliegender Versorgungsspannung als Eingangsspannung VE' ebenfalls 20 Volt am Eingang der Wandlereinheit 2 anliegen. Die Ladeschaltung 4 hat nach dem Einschalten der Versorgungsspannung VE den Hilfskondensator 5 auf eine vorgegebene Maximalspannung VH = 55 Volt aufgeladen.

Fällt nun die Versorgungsspannung VE aus, im gezeigten Beispiel bei einer Millisekunde, so entlädt sich der Arbeitskondensator 3 entsprechend der Ladung, die in die Wandlereinheit 2 fließt.

Die Menge des Ladungsflusses in die Wandlereinheit 2 bestimmt sich nach der Last, die an dem Ausgang der Wandlereinheit 2 angelegt ist. Unterschreitet die Eingangsspannung VE' einen bestimmten Mindestbetrag, so verbindet die Entladeschaltung über den Schalter 6 bzw. über den zweiten N-Kanal-Transistor 12 den Hilfskondensator 5 mit dem Arbeitskondensator 3, so dass Ladung von dem Hilfskondensator 5 auf den Arbeitskondensator 3 abfließt. Man erkennt das Abfließen der Ladung von dem Hilfskondensator 5 an der um den abgeflossenen Ladungsbetrag reduzierten Hilfskondensatorspannung VH.

Ist der Arbeitskondensator 3 wieder über einen bestimmten oberen Schwellwert aufgeladen, so öffnet der Schalter 6 bzw. der zweite N-Kanal-Transistor 12 und das Entladen des Hilfskondensators 5 ist gestoppt. Man erkennt dies durch eine für eine kurze Zeit konstant bleibende Hilfskondensatorspannung VH. Fällt dann die Ladespannung des Arbeitskondensators 3 wieder unter den unteren Schwellwert VE'$_{min}$, so wird der Schalter 6 bzw. der zweite N-Kanal-Transistor 12 erneut geschlossen, und die Ladung von dem Hilfskondensator 5 fließt auf den Arbeitskondensator 3 ab.

Auf diese Weise entsteht eine gezeigte Stufenform in der Entladekurve des Hilfskondensators 5. Es ist auch denkbar, dass die Entladung des Hilfskondensators 5 kontinuierlich in Form einer linearen Funktion verläuft, wenn die aus dem von dem Hilfskondensator 5 abfließende Ladung der Ladung entspricht, die durch die Wandlereinheit 2 zur Versorgung der Nennlast aufgenommen wird.

Bezugszeichenliste

| | |
|---|---|
| 1 | Gleichstromwandlerschaltung |
| 2 | Wandlereinheit |
| 3 | Arbeitskondensator |
| 4 | Ladeschaltung |
| 5 | Hilfskondensator |
| 6 | Schalter |
| 7 | Komparatorschaltung |
| 8 | Zenerdiode |
| 9 | erster Widerstand |
| 10 | erster N-Kanal-Transistor |
| 11 | zweiter Widerstand |
| 12 | zweiter N-Kanal-Transistor |
| 13 | Pull-up-Widerstand |

VE      Versorgungsspannung
VE'     Eingangsspannung der Wandlereinheit (2)
VH      Hilfskondensatorspannung
$V_A$   Ausgangsspannung

**Patentansprüche**

1.  Gleichstromwandlerschaltung (1)
    mit einer Wandlereinheit (2), um eine Eingangsgleichspannung (VE') in eine Ausgangsgleichspannung (VA) mit einem vorgegebenen Ausgangspotential umzuwandeln,
    wobei eine erste Kapazität (5) vorgesehen ist, um bei Ausfall der Eingangsgleichspannung (VE') an einem Eingang der Wandlereinheit (2) eine Spannung zur Verfügung zu stellen, so dass die Ausgangsgleichspannung (VA) das Ausgangspotential über einen vorbestimmten Zeitraum hält,
    **dadurch gekennzeichnet, dass**
    an einer Versorgungsspannung (VE) für den Eingang der Wandlereinheit (2) eine Ladeschaltung (4) angeschlossen ist, um die erste Kapazität (5) mit einem Speicherpotential aufzuladen, das größer ist als das Potential der Eingangsgleichspannung (VE'),
    wobei eine Entladeschaltung vorgesehen ist, um der Wandlereinheit (2) bei Ausfall der Eingangsgleichspannung Ladung aus der ersten Kapazität (5) so zur Verfügung zu stellen, dass das Ausgangspotential der Ausgangsgleichspannung (VA) über den vorbestimmten Zeitraum gehalten wird.

2.  Gleichstromwandlerschaltung (1) nach Anspruch 1, **dadurch gekennzeichnet, dass** die Ladeschaltung (4) einen Transformator, einen Gleichrichter und/oder einen von der Eingangsspannung gespeisten Wechselstromgenerator umfasst.

3.  Gleichstromwandlerschaltung (1) nach Anspruch 1 oder 2, **dadurch gekennzeichnet, dass** die Ladeschaltung (4) eine Ladungspumpe umfasst, um das Speicherpotential aus der Eingangsgleichspannung (VE') zu erzeugen.

4.  Gleichstromwandlerschaltung (1) nach einem der Ansprüche 1 bis 3, **dadurch gekennzeichnet, dass** eine zweite Kapazität (3) vorgesehen ist, die an einem Eingang der Wandlereinheit (2) angeschlossen ist, um mit der Eingangsgleichspannung aufgeladen zu werden, wobei die Entladeschaltung so gestaltet ist, um Ladung der ersten Kapazität (5) nach Ausfall der Eingangsgleichspannung an die zweite Kapazität (3) abzugeben.

5.  Gleichstromwandlerschaltung (1) nach Anspruch 4, **dadurch gekennzeichnet, dass** die erste Kapazität (5) über die Entladeschaltung so mit der zweiten Kapazität (3) gekoppelt ist, dass die erste Kapazität (5) Ladung an die zweite Kapazität (3) abgibt, wenn die in der zweiten Kapazität (3) gespeicherte Potentialdifferenz einen unteren Schwellwert unterschreitet.

6.  Gleichstromwandlerschaltung (1) nach Anspruch 5, **dadurch gekennzeichnet, dass** die Entladeschaltung eine Schalteinrichtung aufweist, über die die erste Kapazität (5) mit der zweiten Kapazität (3) gekoppelt ist.

7.  Gleichstromwandlerschaltung (1) nach Anspruch 6, **dadurch gekennzeichnet, dass** die Entladeschaltung eine Detektionsschaltung aufweist, um festzustellen, ob die in der zweiten Kapazität (3) gespeicherte Potentialdifferenz den unteren Schwellwert unterschreitet.

8.  Gleichstromwandlerschaltung (1) nach Anspruch 7, **dadurch gekennzeichnet, dass** die Detektionsschaltung die Schalteinrichtung (6) durchschaltet, wenn das in der zweiten Kapazität (3) gespeicherte Potential den unteren Schwellwert unterschreitet.

9.  Gleichstromwandlerschaltung (1) nach Anspruch 7 oder 8, **dadurch gekennzeichnet, dass** die Detektionsschaltung die Schalteinrichtung (6) sperrt, wenn das in der zweiten Kapazität (3) gespeicherte Potential den unteren Schwellwert um einen vorbestimmten Betrag überschreitet.

10. Gleichstromwandlerschaltung (1) nach Anspruch 7 bis 9, **dadurch gekennzeichnet, dass** die Detektionsschaltung eine Komparatorschaltung (7) mit einer Hysterese aufweist.

11. Verfahren zum Betreiben einer Gleichstromwandlerschaltung (1) mit einer Wandlereinheit (2), um eine Eingangsgleichspannung (VE') in eine Ausgangsgleichspannung (VA) mit einem vorgegebenen Ausgangspotential umzuwandeln und mit einer ersten Kapazität (5), um bei Ausfall der Eingangsgleichspannung (VE') an einem Eingang der Wandlereinheit (2) eine Spannung zur Verfügung zu stellen, so dass die Ausgangsgleichspannung (VA) das Ausgangspotential über einen vorbestimmten Zeitraum hält, wobei die erste Kapazität (5) bei Anliegen der Eingangsgleichspannung (VE') mit einer an eine Versorgungsspannung (VE) für den Eingang der Wandlereinheit (2) angeschlossenen Ladeschaltung (4) auf ein Speicherpotential aufgeladen wird, das größer ist als das Potential der Eingangsgleichspannung (VE'),

wobei bei Ausfall der Eingangsgleichspannung (VE') Ladung aus der ersten Kapazität so der Wandlereinheit (2) zur Verfügung gestellt wird, dass das Ausgangspotential der Ausgangsgleichspannung (VA) über den vorbestimmten Zeitraum gehalten wird.

## Claims

1. DC/DC converter circuit (1) comprising a converter unit (2) in order to convert a DC input voltage (VE') to a DC output voltage (VA) with a prescribed output potential, wherein a first capacitance (5) is provided in order to supply a voltage in the event of failure of the DC input voltage (VE') at an input of the converter unit (2), with the result that the DC output voltage (VA) holds the output potential for a predetermined period of time, **characterized in that** a charging circuit (4) is connected to a supply voltage (VE) for the input of the converter unit (2) in order to charge the first capacitance (5) with a storage potential, which is greater than the potential of the DC input voltage (VE'), wherein, in the event of failure of the DC input voltage, a discharge circuit is provided in order to provide the converter unit (2) with charge from the first capacitance (5) in such a way that the output potential of the DC output voltage (VA) is held for the predetermined period of time.

2. DC/DC converter circuit (1) according to Claim 1, **characterized in that** the charging circuit (4) comprises a transformer, a rectifier and/or an AC generator fed by the input voltage.

3. DC/DC converter circuit (1) according to Claim 1 or 2, **characterized in that** the charging circuit (4) comprises a charge pump in order to generate the storage potential from the DC input voltage (VE').

4. DC/DC converter circuit (1) according to one of Claims 1 to 3, **characterized in that** a second capacitance (3) is provided, which second capacitance is connected to an input of the converter unit (2) in order to be charged with the DC input voltage, wherein the discharge circuit is designed in such a way as to deliver charge of the first capacitance (5) to the second capacitance (3) after the failure of the DC input voltage.

5. DC/DC converter circuit (1) according to Claim 4, **characterized in that** the first capacitance (5) is coupled to the second capacitance (3) by means of the discharge circuit in such a way that the first capacitance (5) delivers charge to the second capacitance (3) when the potential difference stored in the second capacitance (3) falls below a lower threshold value.

6. DC/DC converter circuit (1) according to Claim 5, **characterized in that** the discharge circuit has a switching device by means of which the first capacitance (5) is coupled to the second capacitance (3).

7. DC/DC converter circuit (1) according to Claim 6, **characterized in that** the discharge circuit has a detection circuit in order to ascertain whether the potential difference stored in the second capacitance (3) falls below the lower threshold value.

8. DC/DC converter circuit (1) according to Claim 7, **characterized in that** the detection circuit connects through the switching device (6) when the potential stored in the second capacitance (3) falls below the lower threshold value.

9. DC/DC converter circuit (1) according to Claim 7 or 8, **characterized in that** the detection circuit blocks the switching device (6) when the potential stored in the second capacitance (3) exceeds the lower threshold value by a predetermined value.

10. DC/DC converter circuit (1) according to Claim 7 to 9, **characterized in that** the detection circuit has a comparator circuit (7) with a hysteresis.

11. Method for operating a DC/DC converter circuit (1) comprising a converter unit (2) in order to convert a DC input voltage (VE') to a DC output voltage (VA) with a prescribed output potential and comprising a first capacitance (5) in order, in the event of failure of the DC input voltage (VE') at an input of the converter unit (2), to supply a voltage, with the result that the DC output voltage (VA) holds the output potential for a predetermined period of time, wherein, in the event of application of the DC input voltage (VE'), the first capacitance (5) is charged to a storage potential, which is greater than the potential of the DC input voltage (VE'), using a charging circuit (4), which is connected to a supply voltage (VE) for the input of the converter unit (2), wherein, in the event of failure of the DC input voltage (VE'), charge is supplied from the first capacitance to the converter unit (2) in such a way that the output potential of the DC output voltage (VA) is held for the predetermined period of time.

**Revendications**

1. Circuit de conversion DC-DC (1) comprenant une unité de conversion (2) destinée à convertir une tension continue d'entrée (VE') en une tension continue de sortie (VA) à un potentiel de sortie prédéterminé,
   dans lequel il est prévu une première capacité (5) destinée à fournir une tension à une entrée de l'unité de conversion (2) en cas de défaillance de la tension continue d'entrée (VE') de manière à ce que la tension continue de sortie (VA) soit maintenue au potentiel de sortie pendant une période de temps prédéterminée,
   **caractérisé en ce qu'**un circuit de charge (4) est connecté à une tension d'alimentation (VE) destinée à l'entrée de l'unité de conversion (2) afin de charger la première capacité (5) à un potentiel d'accumulation qui est supérieur au potentiel de la tension continue d'entrée (VE'),
   dans lequel il est prévu un circuit de décharge destiné à fournir à l'unité de conversion (2) une charge provenant de la première capacité (5) en cas de défaillance de la tension continue d'entrée de manière à ce que la tension continue de sortie (VA) soit maintenue au potentiel de sortie pendant la période prédéterminée.

2. Circuit de conversion DC-DC (1) selon la revendication 1, **caractérisé en ce que** le circuit de charge (4) comprend un transformateur, un redresseur et/ou un générateur de courant alternatif alimenté par la tension d'entrée.

3. Circuit de conversion DC-DC (1) selon la revendication 1 ou 2, **caractérisé en ce que** le circuit de charge (4) comprend une pompe de charge destinée à générer le potentiel d'accumulation à partir de la tension continue d'entrée (VE').

4. Circuit de conversion DC-DC (1) selon l'une quelconque des revendications 1 à 3, **caractérisé en ce qu'**il est prévu une seconde capacité (3) connectée à une entrée de l'unité de conversion (2) afin qu'elle soit chargée à l'aide de la tension continue d'entrée,
   dans lequel le circuit de décharge est conçu pour délivrer la charge de la première capacité (5) à la seconde capacité (3) après défaillance de la tension continue d'entrée.

5. Circuit de conversion DC-DC (1) selon la revendication 4, **caractérisé en ce que** la première capacité (5) est couplée à la seconde capacité (3) par l'intermédiaire du circuit de décharge de manière à ce que la première capacité (5) délivre une charge à la seconde capacité (3) lorsque la différence de potentiel accumulée dans la seconde capacité (3) s'abaisse en dessous d'une valeur de seuil inférieure.

6. Circuit de conversion DC-DC (1) selon la revendication 5, **caractérisé en ce que** le circuit de décharge comporte un dispositif de commutation par l'intermédiaire duquel la première capacité (5) est couplée à la seconde capacité (3).

7. Circuit de conversion DC-DC (1) selon la revendication 6, **caractérisé en ce que** le circuit de décharge comprend un circuit de détection destiné à déterminer si la différence de potentiel accumulée dans la seconde capacité (3) s'abaisse en dessous de la valeur de seuil inférieure.

8. Circuit de conversion DC-DC (1) selon la revendication 7, **caractérisé en ce que** le circuit de détection rend passant le dispositif de commutation (6) lorsque le potentiel accumulé dans la seconde capacité (3) s'abaisse en dessous de la valeur de seuil inférieure.

9. Circuit de conversion DC-DC (1) selon la revendication 7 ou 8, **caractérisé en ce que** le circuit de détection rend non passant le dispositif de commutation (6) lorsque le potentiel accumulé dans la seconde capacité (3) dépasse la valeur de seuil inférieure d'une quantité prédéterminée.

10. Circuit de conversion DC-DC (1) selon la revendication 7 à 9, **caractérisé en ce que** le circuit de détection comprend un circuit comparateur (7) à hystérésis.

11. Procédé pour le fonctionnement d'un circuit de conversion DC-DC (1) comprenant une unité de conversion (2) destinée à convertir une tension continue d'entrée (VE') en une tension continue de sortie (VA) à un potentiel de sortie prédéterminé et une première capacité (5) destinée à fournir une tension à une entrée de l'unité de conversion (2) en cas de défaillance de la tension continue d'entrée (VE') de manière à ce que la tension continue de sortie (VA) soit maintenue au potentiel de sortie pendant une période de temps prédéterminée,

dans lequel la première capacité (5) est chargée à un potentiel d'accumulation supérieur au potentiel de la tension continue d'entrée (VE') par un circuit de charge (4) connecté à une tension d'alimentation (VE) destinée à l'entrée de l'unité de conversion (2) lorsque la tension continue d'entrée (VE') est appliquée,

dans lequel la charge provenant de la première capacité est fournie à l'unité de conversion (2) en cas de défaillance de la tension continue d'entrée (VE') de manière à ce que la tension continue de sortie (VA) soit maintenue au potentiel de sortie pendant la période prédéterminée.

# Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5258901 A
- DE 10138536
- EP 0945968 A
- US 5015870 A